# EUROPEAN PATENT APPLICATION

(11) **EP 1 541 614 A1**
(43) Date of publication of application: **15.06.2005**
(21) Application number: 03753938.4
(22) Date of filing: 18.09.2003
(51) Int. Cl.: C08G 77/04, C08L 83/04, C09D 183/04

(54) **THERMOPLASTIC LAYERED ALKYLSILOXANES AND PROCESS FOR PRODUCTION THEREOF**

(30) Priority: 18.09.2002 JP 2002272333
(71) Applicant: National Institute for Materials Science, Tsukuba-shi, Ibaraki 305-0047 (JP); National Institute of Advanced Industrial Science and Technology, Tokyo 100-8921 (JP)
(72) Inventor: Fujii, Kazuko, Tsukuba-shi, Ibaraki 305-0047 (JP); Kodama, Hiroshi, Tsukuba-shi, Ibaraki 305-0047 (JP); Iyi, Nobuo, Tsukuba-shi, Ibaraki 305-0047 (JP); Fujita, Taketoshi, Tsukuba-shi, Ibaraki 305-0047 (JP); Hayashi, Shigenobu, Tsukuba-shi, Ibaraki 305-8565 (JP)
(74) Representative: Calamita, Roberto
(86) International application number: PCT/JP2003/011913
(87) International publication number: WO 2004/026943

(57) **Abstract**

An alkyl silane compound represented by the general formula RSi(OL)₃ (here, R is an alkyl group, L is H, Si or a group capable of easily changing the OL group into the OH group in a solution or a suspension), a silicon compound represented by the general formula Si(OM)₄ (here, M is H, Si or a group capable of easily changing the OM group into the OH group in a solution or a suspension), and water are reacted in a solvent or a dispersion medium. A thermoplastic layered alkyl siloxane with the composition formula represented by the general formula (RSi₁₊ₓO_{2+1.5x+0.5z}L_{z})ₘ (here, R is an alkyl group, L is H, Si or a group capable of easily changing the OL group into the OH group in a solution or a suspension, and 0.5 ≤ x ≤ 2, 2 ≤ m ≤ 200, 0 ≤ z), which is a thermoplastic inorganic/organic layered composite having good shaping property and dispersing property, capable of transitioning at various temperatures including the vicinity of the room temperature can be provided.

## Description

### Technical Field

The present invention relates to a thermoplastic layered alkyl siloxane and a production method therefor. More specifically, the present invention relates to a novel thermoplastic layered alkyl siloxane having a relatively wide melting point temperature range including the vicinity of the room temperature of about -30 to 60°C.

### Background Art

An inorganic/organic layered composite material is already known. Then, among the inorganic/organic layered composite materials, in particular, a composite material with an inorganic material and an organic material bonded covalently is suitable for the practical use from the reasons of difficulty of generating liberation of the organic material, or the like. Recently, development has been promoted in this field (see for example the articles 1 and 2).

However, according to the inorganic/organic layered composite materials known so far, shaping can hardly be executed due to the absence of the plasticity by heating. Then, although it can be shaped using a solvent or a dispersion medium, a problem of the generation of cracking accompanied by contraction is involved in this case.

Since the inorganic/organic layered composite material has the both inorganic and organic natures, possibility as a novel filler for taking the place of the conventional inorganic material filler (filling material) can be considered, however, since it is not melted by heating as mentioned above, the affinity with the matrix has been lacked.

In view of the above-mentioned, although dramatic improvement of not only the mechanical strength but also the dispersion operation and the dispersion property can be expected by a layered inorganic/organic composite material having a melting point, such a layered inorganic/organic composite material has not been known conventionally.
Article 1: Bull. Chem. Soc. Jpn., 1997, 70, 2847
Article 2: Langmuir, 18 (2002),1144

An object of the present invention is to provide a novel inorganic/organic layered composite material capable of solving the above-mentioned problems of the conventional technology, and capable of transitioning at various temperatures in the vicinity of a room temperature having good shaping property and dispersing property, a reversible change between the solid phase and the liquid phase, and a relatively large transition heat by providing the thermo-plasticity to the inorganic/organic layered composite material.

### Disclosure of Invention

In order to solve the above-mentioned problems, the present invention firstly provides a thermoplastic layered alkyl siloxane with the composition represented by the general formula (RSi₁₊ₓO_{2+1.5x+0.5z}L_{z})ₘ (here, R is an alkyl group, L is H, Si or a group capable of easily changing the OL group into the OH group in a solution or a suspension, and 0.5 ≤ x ≤ 2, 2 ≤ m ≤ 200, 0 ≤ z), it secondly provides a thermoplastic layered alkyl siloxane having the melting point in a -30 to 60°C temperature range, and it thirdly provides a thermoplastic alkyl siloxane characterized in that the decomposing temperature is 300°C or more.

Then, the present invention fourthly provides a production method for the layered alkyl siloxane, characterized in that an alkyl silane compound represented by the general formula RSi(OL)₃ (here, R is an alkyl group, L is H, Si or a group capable of easily changing the OL group into the OH group in a solution or a suspension) is reacted with water in a solvent or a dispersion medium, it fifthly provides a production method for a thermoplastic layered alkyl siloxane, characterized in that a silicon compound represented by the general formula Si(OM)₄ (here, M is H, Si or a group capable of easily changing the OM group into the OH group in a solution or a suspension) is reacted in a solvent or a dispersion medium in the above-mentioned method, furthermore, it sixthly provides a production method for a thermoplastic layered alkyl siloxane, characterized in that an alkaline reagent or an acidic reagent is used as a catalyst, it seventhly provides a production method for a thermoplastic layered alkyl siloxane, characterized in that an ammonium is used as a catalyst, and reaction is carried out with the reagent concentration in the reaction liquid of 10 wt% or more at 50°C or more, and moreover, it eighthly provides a production method for a thermoplastic layered alkyl siloxane, characterized in that the reagent concentration in the reaction liquid is controlled in a range of 10 to 80 wt% in the reaction temperature ranging from 50 to 200°C.

The present invention ninthly provides a coating agent, characterized in containing the thermoplastic layered alkyl siloxane as the effective component, it tenthly provides a compact, characterized in being shaped using the thermoplastic layered alkyl siloxane, it eleventhly provides the compact, characterized in being a thin film, it twelfthly provides a compact, wherein the thin film is a single layer of an inorganic/organic composite, furthermore, it thirteenthly provides a filler, characterized in using the thermoplastic layered alkyl siloxane for providing at least a part thereof, furthermore, it fourteently provides an energy storing material, characterized in using the thermoplastic layered alkyl siloxane for providing at least a part thereof, and furthermore, it fifteenthly provides a temperature sensor, characterized in using the thermoplastic layered alkyl siloxane for providing at least a part thereof.

The present invention mentioned above has been achieved based on the results of the detailed discussion by the present inventor as follows.

That is, first, the present inventor has developed an inorganic/organic layered composite material having a silicate and a long chain alkyl ammonium bonded covalently.

According to the developed inorganic/organic layered composite material, the alkyl chain part has the so-called interdigitated structure, with the inorganic parts and the alkyl chains facing adjacently arranged alternately like comb teeth so as to provide a regular arrangement similar to an alkane crystal.

Then, the present inventor have found out that the heat is absorbed at the time the regular arrangement of the inorganic/organic layered composite material collapses. However, according to the inorganic/organic layered composite material, even in the case the alkyl chain is broken, plasticity is not provided so that the shaping property is poor.

Then, the present inventors have promoted the discussion based on the thought that the inorganic/organic layered composite material provided the flowability according to the collapse of the alkyl chain arrangement by reducing the influence of the inorganic part posed on the thermal characteristic of the composite material so as to find out that a siloxane is appropriate for the material comprising the inorganic part.

Then, they have promoted the discussion based on the thought that as the organic part corresponding to the siloxane, a group without disturbing the formation of the layered structure or the risk of decomposing by the reaction with various kinds of reagents in the synthesizing process of the inorganic/organic layered composite material, capable of having reversibly the solid phase-liquid phase transition in the heating-cooling process, and having the input and output of the transition heat in the solid phase-liquid phase transition process so as to find out that an alkyl chain is optimum.

Although one having an alkane crystal having a straight chain like alkyl chain as the alkyl chain has the phase change at various temperatures depending on the chain length so that it is expected as an appropriate energy storing material, since the alkane crystal has the melting point at -9.55°C at most even in the case of a dodecane crystal, due to the low melting point, its range of the practical use is limited, and thus development of a compound having the melting point in the vicinity of a room temperature has been awaited.

Then, according to the present invention, it was found out that the problems can be solved by a layered alkyl siloxane with the ratio of a siloxane and an alkyl chain represented by the general formula (RSi₁₊ₓO_{2+1.5x+0.5z}L_{z})ₘ (here, R is an alkyl group, L is H, Si or a group capable of easily changing the OL group into the OH group in a solution or a suspension, and 0.5 ≤ x ≤ 2,2 ≤ m ≤ 200, 0 ≤ z). Then, they have thought that a thermoplastic layered alkyl siloxane can be developed by not only producing a compound as a combination of a siloxane and an alkyl chain but also by appropriately controlling the siloxane network for having the plasticity and the melting point of the novel inorganic/organic layered composite by heat. As a result of the elaborate discussion, a thermoplastic layered alkyl siloxane having a relatively wide melting point of about -30 to 60°C including the vicinity of the room temperature as the melting point temperature range can be obtained.

According to the layered alkyl siloxane, by controlling the arrangement such that the alkyl chain can have a regular arrangement as if it is an alkane crystal in the composite and controlling the siloxane network structure by the nano level, a layered alkyl siloxane having a relatively wide melting point of about -30 to 60°C including the vicinity of the room temperature as the melting point temperature range can be produced.

When the cross linking of the siloxane network is developed excessively, the influence on the thermal characteristics of the composite becomes too large so that a composite not having a melting point until it is decomposed can be obtained. In contrast, in the case the siloxane network is vulnerable and support of the composite structure depends largely on the van der Walls force functioning between the alkyl chains, although the layered alkyl siloxane provides the plasticity easily by heating, the structure collapses according to the flow so that the structure cannot be reproduced even if it is cooled down so as to change the thermal characteristics.

In view of these points, according to the present invention, by providing the possibility of forming a regular arrangement of the alkyl chain and controlling the siloxane network for providing an appropriate influence on the thermal characteristics of the composite, a layered alkyl siloxane having a relatively wide melting point of about -30 to 60°C including the vicinity of the room temperature as the melting point temperature range can be provided.

### Brief Description of Drawings

FIG. 1 is an example of a TG-DTA curve of a layered alkyl siloxane.
FIG. 2 is an example of a DSC curve of a layered alkyl siloxane.

### Best Mode for Carrying Out the Invention

The present invention has the characteristics. Hereinafter, embodiments thereof will be explained.

As mentioned above, the composition of a thermoplastic layered alkyl siloxane provided by the present invention can be represented by the above-mentioned general formula. According to the composition formula, the coefficient x needs to be larger than 0, and more practically, it is 0.5 or more. Moreover, according to the present invention, if the value is too large there is a concern that it becomes amorphous, and it is practically 2 or less.

Then, m is 2 or more according to a layered alkyl siloxane of the present invention. The upper limit thereof is practically 200 or less. The coefficient z is 0 or more.

Such a thermoplastic layered alkyl siloxane of the present invention is provided more preferably as one having the characteristics sufficiently suitable for the purposed use including a relatively wide melting point of about -30 to 60°C including the vicinity of the room temperature as the melting point temperature range and a relatively high decomposing temperature of 300°C to 500°C. Of course it is needless to say that a layered alkyl siloxane which can melt at various temperatures can be produced by controlling the polymerization degree of the layered alkyl siloxane, the composition ratio, the alkyl chain length and the nano level structure.

Since the layered alkyl siloxane of the present invention is thermoplastic and soluble to a plurality of kinds of solvents, it can be applied as a coating agent, and it is utilized particularly preferably for the surface improvement of a glass. Moreover, since the layered alkyl siloxane provides the thermo plasticity by the phase transition of the solid phase and the liquid phase, there is no concern of the difference in the plasticity between the vicinity of the substance surface and the inside of the substance as in a part of the commonly used polymers, and thus a substance having a complicated shape can be coated.

Moreover, since it has a layered structure, it can be divided finely to the nano level so that it can be utilized for coating a nano material having a complicated shape, or the like. Then, it is also useful as a shaping material for a compact or a filler.

The compact in this case can be a thin film. In particular, the thin film can be provided as a single layer of an inorganic/organic composite.

Furthermore, since the thermoplastic layered alkyl siloxane of the present invention has the physical properties of absorbing the heat at the time of the temperature rise and generating the heat at the time of the temperature drop, it can be utilized as an energy storing materiaL Moreover, the melting point of the novel inorganic/organic layered composite is useful also as a temperature retaining agent for maintaining the temperature of food or a drink or for maintaining the body temperature at the time of exercise or sick.

Since the layered alkyl siloxane of the present invention has the alkyl chain and the inorganic part compositely via a covalent bond, it can be divided finely to a nano level so that for example in the case it is peeled off to one layer, the inorganic/organic junction part can be maintained.

The characteristics of the thermoplastic layered alkyl siloxane of the present invention can be listed as follows.
(1) Since it has an alkyl chain, the affinity of an organic polymer is high.
(2) It has a size smaller than the conventional filler of an inorganic material so that a high dispersion property can be provided.
(3) Since it is layered, an alkyl siloxane of a necessary size thickness can be provided easily by a method of peeling, or the like.
(4) Since it has a melting point, a dispersion operation can be facilitated.
(5) Since it has a melting point, it can be applied as a temperature sensor.
(6) Owing to the relatively large heat of transition, the melting point can be set at various temperatures, and by combining a plurality of layered alkyl siloxanes having different heat absorbing-heat generating temperatures, it can be applied as an energy storing material in a wide temperature range. For example, a combination of the layered alkyl siloxane shown in the Example 1 to be described later and a layered alkyl siloxane to be melted at 40°C, or the like can be considered.

The thermoplastic layered alkyl siloxane of the present invention has these various excellent characteristics. The thermoplastic layered alkyl siloxane can be produced effectively by for example the method mentioned above.

Then, by showing the examples hereafter, the present invention will be explained in further details. Of course the invention is not limited by the examples shown below.

### EXAMPLES

### <Example 1>

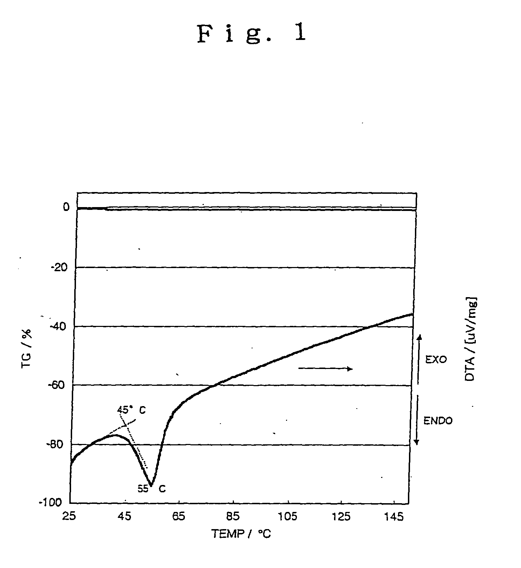

A reaction liquid was obtained by sufficiently dispersing 66.7 g of an octadecyl triethoxy silane, 33.3 g of a tetraethoxy silane and water in an ethanoL After maintaining the reaction liquid at 150°C for one day, a specimen was filtrated, washed with water and dried so as to obtain a purposed layered alkyl siloxane. It was revealed from the result of the elemental analysis and solid high resolution ¹³C nuclear magnetic resonance (NMR) that a synthesized layered alkyl siloxane has C₁₈H₃₇Si group and a siloxane group in the composition and corresponds to the above-mentioned composition formula. Furthermore, from the result of the X-ray diffraction (XRD), the transmission type electron microscope observation (TEM), it was learned that the layer interval of the layered alkyl siloxane is about 2.8 nm and the long chain alkyl chain parts bonded to the adjacent siloxanes are arranged alternately like comb teeth and form a mono-moleculer layer, that is, it has the so-called interdigitated arrangement. The thermogravimetric-differential thermal analysis (TG-DTA) was carried out for the obtained white layered alkyl siloxane. As shown in FIG 1, although the heat absorption peak is shown in the vicinity of 55°C, the weight change was not observed.

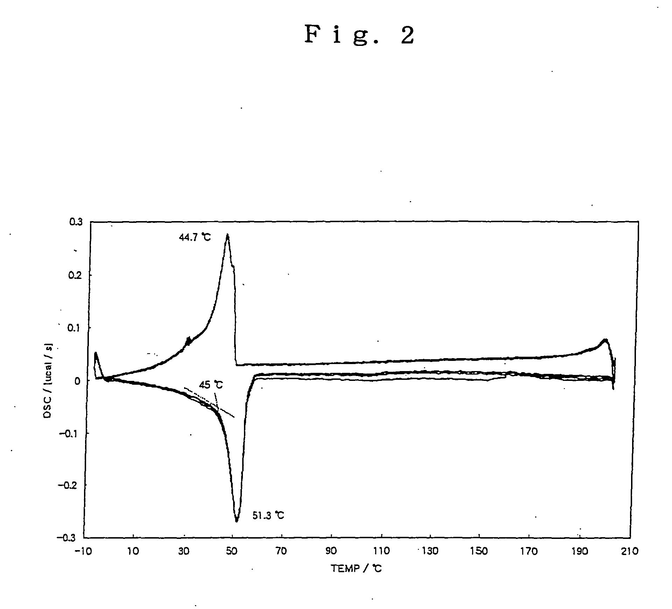

The specimen after the thermogravimetric-differential thermal analysis (TG-DTA) measurement up to 150°C was changed to be transparent. According to the microscope observation of the heating process from the vicinity of the room temperature, it was changed from opaque powders into transparent droplets in the vicinity of the heat absorbing peak so as to show the flowability. Furthermore, according to the differential scanning calorimetric analysis (DSC), as shown in FIG 2, the heat absorbing peak was observed in the vicinity of 51°C and the heat absorption starting temperature was 45°C.

Furthermore, even in the case heating and cooling operation was executed repeatedly, the thermal behavior was not changed. Moreover, according to the XRD result of the specimen after heating, or the like, it was shown that the specimen structure did not collapse after heating. From these results, it was learned that a layered alkyl siloxane to be melted at 51°C was obtained.

### <Example 2>

In the Example 1, an ammonium was added as a catalyst to the reaction liquid in the presence of an octadecyl triethoxy silane, a tetraethoxy silane and water, and it was maintained at 150°C for 12 hours. A layered alkyl siloxane to be melted at 51°C as the same in the Example 1 was obtained.

### <Example 3>

A reaction liquid was obtained by sufficiently dispersing 61.5 g of a dodecyl triethoxy silane, 38.5 g of a tetraethoxy silane and water in an ethanoL After maintaining the reaction liquid at 100°C for one day, a specimen was filtrated, washed with water and dried so as to obtain a purposed layered alkyl siloxane. It was learned that a layered alkyl siloxane was obtained from the result of the X ray diffraction (XRD), or the like as in the Example 1. It was learned that the layer interval of the layered alkyl siloxane is about 3.5 nm and the alkyl chains coupled with the siloxanes are arranged regularly so as to form a two molecule layers unlike the Example 1. As in the Example 1, the DSC measurement was carried out for the layered alkyl siloxane so that the heat absorbing peak was observed in the vicinity of -0.9°C and the heat absorption starting temperature was -28.9°C.

Furthermore, even in the case heating and cooling operation was executed repeatedly, the thermal behavior was not changed so that it was learned that a layered alkyl siloxane to be melted at -0.9°C was obtained.

### Industrial Applicability

As heretofore explained in detail, according to the present invention, a novel inorganic/organic layered composite material capable of solving the above-mentioned problems of the conventional technology, and capable of transitioning at various temperatures in the vicinity of a room temperature having good shaping property and dispersing property, a reversible change between the solid phase and the liquid phase, and a relatively large heat of transition by providing the thermo-plasticity to the inorganic/organic layered composite material can be provided.

## Claims

1. A thermoplastic layered alkyl siloxane with the composition represented by the general formula (RSi₁₊ₓO_{2+1.5x+0.5z}L_{z})ₘ (here, R is an alkyl group, L is H, Si or a group capable of easily changing the OL group into the OH group in a solution or a suspension, and 0.5 ≤ x ≤ 2, 2 ≤ m ≤ 200, 0 ≤ z).

2. The thermoplastic layered alkyl siloxane according to claim 1, **characterized in that** the melting point is in a temperature range of -30 to 60°C.

3. The thermoplastic layered alkyl siloxane according to claim 1 or 2, **characterized in that** the decomposing temperature is 300°C or more.

4. A production method for the layered alkyl siloxane according to any one of claims 1 to 3, **characterized in that** an alkyl silane compound represented by the general formula RSi(OL)₃ (here, R is an alkyl group, L is H, Si or a group capable of easily changing the OL group into the OH group in a solution or a suspension) is reacted with water in a solvent or a dispersion medium.

5. The production method for a thermoplastic layered alkyl siloxane according to any of claims 1 to 3, **characterized in that** a silicon compound represented by the general formula Si(OM)₄ (here, M is H, Si or a group capable of easily changing the OM group into the OH group in a solution or a suspension) is reacted in a solvent or a dispersion medium.

6. The production method for a thermoplastic layered alkyl siloxane according to claim 4 or 5, **characterized in that** an alkaline reagent or an acidic reagent is used as a catalyst.

7. The production method for a thermoplastic layered alkyl siloxane according to any one of claims 4 to 6, **characterized in that** an ammonium is used as a catalyst, and reaction is carried out with the reagent concentration in the reaction liquid of 10 wt% or more at 50°C or more.

8. The production method for a thermoplastic layered alkyl siloxane according to any one of claims 4 to 7, **characterized in that** the reagent concentration in the reaction liquid is controlled in a range of 10 to 80 wt% in the reaction temperature ranging from 50 to 200°C.

9. A coating agent, **characterized in** containing the thermoplastic layered alkyl siloxane according to any one of claims 1 to 3 as the effective component.

10. A compact, **characterized in** being shaped using the thermoplastic layered alkyl siloxane according to any one of claims 1 to 3.

11. The compact according to claim 10, **characterized in** being a thin film.

12. The compact according to claim 11, **characterized in that** the thin film is a single layer of an inorganic/organic composite.

13. A filler, **characterized in** using the thermoplastic layered alkyl siloxane according to any one of claims 1 to 3 for providing at least a part thereof.

14. An energy storing material, **characterized in** using the thermoplastic layered alkyl siloxane according to any one of claims 1 to 3 for providing at least a part thereof.

15. A temperature sensor, **characterized in** using the thermoplastic layered alkyl siloxane according to any one of claims 1 to 3 for providing at least a part thereof.
